# EUROPÄISCHE PATENTANMELDUNG

(11) **EP 3 893 304 A1**
(43) Veröffentlichungstag der Anmeldung: **13.10.2021**
(21) Anmeldenummer: 21166007.1
(22) Anmeldetag: 30.03.2021
(51) Int. Cl.: H01M 8/04014, H01M 8/04029, H01M 8/04089, H01M 8/0432, H01M 8/0438, H01M 8/04701, H01M 8/04746, H01M 8/0662, H01M 8/04119

(54) **BRENNSTOFFZELLSYSTEM ZUR STROM- UND WÄRMEERZEUGUNG SOWIE VERFAHREN ZUM BETREIBEN DES BRENNSTOFFZELLSYSTEMS**

(30) Priorität: 08.04.2020 DE 102020109892
(71) Anmelder: inhouse engineering GmbH, 12555 Berlin (DE)
(72) Erfinder: Lohöfener, Burkhard, 09599 Freiberg (DE); Steffen, Giesel, 04329 Leipzig (DE); Block, Matthias, 10245 Berlin (DE); Christoph, Hildebrandt, 16761 Henningsdorf (DE)
(74) Vertreter: Sperling, Thomas

(57) **Zusammenfassung**

Die Erfindung betrifft ein Brennstoffzellsystem, welches eine Brennstoffzelle mit einem anodischen Reaktionsbereich und einem kathodischen Reaktionsbereich aufweist, wobei dem anodischen Reaktionsbereich ein gasförmiger Brennstoff, vorzugsweise Wasserstoff, zugeführt und ein anodisches Abgas abgeführt wird und wobei dem kathodischen Reaktionsbereich sauerstoffhaltige Umgebungsluft zugeführt und kathodisches Abgas abgeführt wird. Weiterhin weist das Brennstoffzellsystem einen Sauerstoffabreicherungsreaktor auf, in welchen anodisches Abgas und zumindest ein Teilstrom des kathodischen Abgases zusammengeführt werden. Der Sauerstoffabreicherungsreaktor umfasst einen Katalysator, welcher eine Reaktion von im kathodischen Abgas enthaltenem Sauerstoff und im anodischen Abgas enthaltenem Wasserstoff unter Ausbildung eines wasserdampfhaltigen, sauerstoffreduzierten Abgasgemischs katalysiert. Weiterhin weist das Brennstoffzellsystem einen Brenner zum Verbrennen von Abgasen der Brennstoffzelle und/oder zuführbarem gasförmigen Brennstoff auf, wobei dem Brenner kathodisches Abgas und/oder wasserdampfhaltiges, sauerstoffreduziertes Abgasgemisch aus dem Sauerstoffabreicherungsreaktor zuführbar ist.

## Beschreibung

Die Erfindung betrifft ein Brennstoffzellsystem zur Strom- und Wärmeerzeugung sowie ein Verfahren zum Betreiben eines Brennstoffzellsystems.

Bei Brennstoffzellsystemen mit Anoden-Loop wird ein Teil des anodenseitigen Abgases rezykliert, um eine Nutzung des im anodischen Abgas überschüssig enthaltenen Wasserstoffs zu ermöglichen. So ist aus DE 101 15 236 A1 ein Brennstoffzellsystem mit anodenseitiger Rezirkulationseinrichtung bekannt, bei welcher ein anodisches Abgas einer Brennstoffzelle dem anodischen Brennstoffzelleneingang zurückgeführt wird. Infolge der Rezirkulation reichern sich anodenseitig gebildeter Wasserdampf und Stickstoff aus kathodenseitig zugeführter Umgebungsluft im Rezirkulationskreislauf an, wodurch der Betrieb der Brennstoffzelle ungünstig beeinflusst wird. Ein Teil des anodischen Abgases wird daher periodisch oder kontinuierlich abgeführt, wobei stets auch ein Anteil von im Rezirkulationskreislauf enthaltenem Wasserstoff, welcher in der Brennstoffzelle nicht vollständig umgesetzt wurde, in die Umgebung abgeführt wird. Zur Vermeidung unkontrollierter Wasserstoffemissionen schlägt DE 101 15 236 A1 vor, den im anodischen Abgas enthaltenen Wasserstoff mit Luftsauerstoff unter Einbeziehung eines Katalysators zu Wasser reagieren zu lassen. Eine weitere Möglichkeit zur Vermeidung einer unerwünschten Wasserstoffemission besteht in der Verbrennung des im anodischen Abgas enthaltenen Wasserstoffs. So ist aus DE 10 2010 011 559 A1 ein Brennstoffzellsystem bekannt, bei welchem einer Brennstoffzelle ein Brenner zum Verbrennen der Brennstoffzellabgase nachgeordnet ist. Eine direkte Verbrennung des in den Brennstoffzellabgasen enthaltenen Wasserstoffs erweist sich jedoch als problematisch, da bei der Verbrennung hohe Flammentemperaturen erreicht werden, welche eine Bildung von unerwünschten Stickoxiden (NOₓ) im Brennerabgas begünstigen.

Es ist daher Aufgabe der Erfindung, ein Brennstoffzellsystem vorzuschlagen, welches eine thermische Nutzung von Brennstoffzellabgasen ermöglicht, wobei eine Stickoxidemission geringgehalten werden kann. Ferner ist es Aufgabe der Erfindung, ein Verfahren zum Betreiben eines solchen Brennstoffzellsystems vorzuschlagen.

Die Aufgabe wird durch ein Brennstoffzellsystem mit den Merkmalen gemäß Patentanspruch 1 und einem Verfahren mit den Merkmalen gemäß Patentanspruch 11 gelöst. Weiterbildungen und Ausführungsvarianten sind jeweils in den abhängigen Patentansprüchen angegeben.

Der Erfindung liegt die Idee zugrunde, eine Entstehung von Stickoxiden bei der Verbrennung von Brennstoffzellabgasen zu verringern, in dem der Verbrennung Brennstoffzellabgase mit gezielt reduziertem Sauerstoffgehalt zugeführt werden. Eine Reduzierung einer Stickoxidemission wird mit dem nachfolgend beschriebenen Brennstoffzellsystem ermöglicht.

Das erfindungsgemäße Brennstoffzellsystem weist eine Brennstoffzelle mit einem anodischen Reaktionsbereich und einem kathodischen Reaktionsbereich auf, wobei dem anodischen Reaktionsbereich ein gasförmiger Brennstoff, vorzugsweise Wasserstoff, zugeführt und ein anodisches Abgas abgeführt wird und wobei dem kathodischen Reaktionsbereich sauerstoffhaltige Umgebungsluft zugeführt und kathodisches Abgas abgeführt wird. Weiterhin weist das Brennstoffzellsystem einen Sauerstoffabreicherungsreaktor auf, in welchen anodisches Abgas und zumindest ein Teilstrom des kathodischen Abgases zusammengeführt werden. Der Sauerstoffabreicherungsreaktor umfasst einen Katalysator, welcher eine Reaktion von im kathodischen Abgas enthaltenem Sauerstoff und im anodischen Abgas enthaltenem Wasserstoff unter Ausbildung eines wasserdampfhaltigen, sauerstoffreduzierten Abgasgemischs katalysiert. Weiterhin weist das Brennstoffzellsystem einen Brenner zum Verbrennen von Abgasen der Brennstoffzelle und/oder zuführbarem gasförmigen Brennstoff auf, wobei dem Brenner kathodisches Abgas und/oder wasserdampfhaltiges, sauerstoffreduziertes Abgasgemisch aus dem Sauerstoffabreicherungsreaktor zuführbar ist.

Nach der Konzeption des erfindungsgemäßen Brennstoffzellsystems wird zumindest ein Teilstrom des kathodischen Abgases und anodisches Abgas vor der Verbrennung einem Sauerstoffabreicherungsreaktor zugeführt, in welchem ein Teil des im anodischen Abgas enthaltenen Wasserstoffs mit dem im kathodischen Abgas enthaltenen Sauerstoff unter Anwesenheit des im Sauerstoffabreicherungsreaktor vorhandenen Katalysators zu Wasserdampf reagieren kann. Vorteilhaft wird dabei die thermische Energie der heißen kathodischen und anodischen Abgase der Brennstoffzelle genutzt, so dass eine Vorkonditionierung, insbesondere Temperierung, der zugeführten Volumenströme entfallen kann. Der Sauerstoffabreicherungsreaktor trägt somit zur Bildung eines wasserdampfhaltigen, sauerstoffreduzierten Abgasgemischs bei, welches aufgrund des reduzierten Sauerstoffgehaltes bei seiner Verbrennung im Brenner weniger Stickoxide ausbildet, so dass Stickoxidemissionen verringert werden können. Der im zugeführten Abgas enthaltene Wasserdampf trägt vorteilhaft zur Verringerung der Verbrennungstemperaturen im Brenner bei, was sich ebenfalls positiv auf eine Verringerung der Stickstoffemissionen auswirkt. Die Erfindung ermöglicht eine nahezu vollständige Ausnutzung des dem Brennstoffzellsystem zugeführten Wasserstoffs, so dass die Effizienz des Brennstoffzellsystems insgesamt verbessert werden kann. Dabei liefert die Brennstoffzelle elektrische und thermische Energie, wobei mit dem Brenner zusätzliche thermische Energie erzeugt wird.

Als Katalysator, welcher im Sauerstoffabreicherungsreaktor eine Reaktion von im kathodischen Abgas enthaltenem Sauerstoff und im anodischen Abgas enthaltenem Wasserstoff unter Ausbildung eines wasserdampfhaltigen, sauerstoffreduzierten Abgasgemischs katalysiert, kann ein Edelmetall, wie beispielsweise Palladium, eingesetzt werden. Gemäß einer Ausgestaltung der Erfindung kann ein Katalysator verwendet werden, welcher mit 0,5 % Palladium an Aluminiumoxid ausgebildet ist.
Zur Unterstützung der Verbrennung im Brenner kann zusätzlich eine Zufuhr von sauerstoffhaltiger Umgebungsluft in den Brenner vorgesehen sein.

Zur Bereitstellung eines definierten wasserdampfhaltigen, sauerstoffreduzierten Abgasgemischs mit vorgegebenen Sauerstoffgehalt und vorgegebenen Wasserdampfgehalt beziehungsweise vorgegebenen Taupunkt kann eine Vorkonditionierung der dem Sauerstoffabreicherungsreaktor zugeführten Abgasströme vorgesehen sein. Eine Vorkonditionierung von kathodischem Abgas kann mit einer ersten Regeleinrichtung realisiert werden, welche in Strömungsrichtung des kathodischen Abgases zwischen der Brennstoffzelle und dem Sauerstoffabreicherungsreaktor angeordnet ist. Dabei kann die erste Regeleinrichtung eingerichtet sein, einen Volumenstrom und eine Temperatur des dem Sauerstoffabreicherungsreaktor zugeführten kathodischen Abgasteilstroms zu regeln. Zur Temperierung kann die erste Regeleinrichtung eine fluidische Temperiereinrichtung oder eine elektrische Temperiereinrichtung aufweisen. Die fluidische Temperiereinrichtung kann einen Platten-Wärmeübertrager oder einen Rohrbündel-Wärmeübertrager aufweisen. Ferner kann vorgesehenen sein, dass dem dem Sauerstoffabreicherungsreaktor zugeleiteten kathodischen Abgasteilstrom sauerstoffhaltige Umgebungsluft zumischbar ist. Eine Beimischung von sauerstoffhaltiger Umgebungsluft in den Sauerstoffabreicherungsreaktor kann für eine Startphase des Betriebes des Sauerstoffabreicherungsreaktors vorgesehen sein. Während des Normalbetriebes ist eine Beimischung von sauerstoffhaltiger Umgebungsluft in den Sauerstoffabreicherungsreaktor nicht vorgesehen.

Zusätzlich oder alternativ kann in Strömungsrichtung des anodischen Abgases zwischen der Brennstoffzelle und dem Sauerstoffabreicherungsreaktor eine zweite Regeleinrichtung angeordnet sein, welche einen Volumenstrom des dem Sauerstoffabreicherungsreaktor zugeleiteten kathodischen Abgasteilstroms erfasst und einen Volumenstrom des dem Sauerstoffabreicherungsreaktor zugeleiteten anodischen Abgases in Abhängigkeit des erfassten Volumenstroms des kathodischen Abgasteilstroms regelt.

Zur Erfassung der Volumenströme in den Zuführungen zum Sauerstoffabreicherungsreaktor können Durchflusssensoren, insbesondere Volumenstromerfassungssensoren und Druckerfassungssensoren vorgesehen sein, welche erfasste Daten von Volumenströmen an die erste Regeleinrichtung und an die zweite Regeleinrichtung übertragen können. Ferner kann eine sensorische Erfassungseinrichtung vorgesehen sein, welche Daten von mehreren Volumenstromerfassungssensoren und Druckerfassungssensoren erfasst, auswertet und an die erste und zweite Regeleinrichtung bereitstellt.

Die Regelung der Volumenströme des kathodischen Abgasteilstroms und des anodischen Abgases in den Sauerstoffabreicherungsreaktor gewährleistet gleichbleibende Reaktionsbedingungen im Sauerstoffabreicherungsreaktor, so dass vorteilhaft ein definiertes wasserdampfhaltiges, sauerstoffreduziertes Abgasgemisch bereitgestellt werden kann. Die Regelbarkeit der Volumenströme des kathodischen Abgasteilstroms und des anodischen Abgases gewährleistet weiterhin, dass die Konzentration eines sich im Sauerstoffabreicherungsreaktor gebildeten wasserdampfhaltigen, sauerstoffreduzierten Abgasgemischs unterhalb der Zündgrenze bleibt.

Der Sauerstoffabreicherungsreaktor kann eine Temperiereinrichtung zum Temperieren des Sauerstoffabreicherungsreaktors aufweisen. Mit der Temperiereinrichtung ist der Sauerstoffabreicherungsreaktor vorteilhaft auf eine reaktionsgünstige Betriebstemperatur temperierbar. Die Temperiereinrichtung ermöglicht ferner eine Temperierung des Sauerstoffabreicherungsreaktors unterhalb der Zündtemperatur von Wasserstoff.

Der anodische Reaktionsbereich kann eine ventilgesteuerte Rezirkulation für anodisches Abgas aufweisen, welche einen Teilstrom des anodischen Abgases dem anodischen Reaktionsbereich zuführt. Dabei kann die ventilgesteuerte Rezirkulation für anodisches Abgas eine Drosseleinrichtung aufweisen, welche eine Strömung durch den anodischen Reaktionsbereich zur Bereitstellung eines vorgegebenen Drucks drosselt.

Gemäß einer vorteilhaften Weiterbildung des erfindungsgemäßen Brennstoffzellsystems kann in Strömungsrichtung des zugeführten gasförmigen Brennstoffs vor einem anodischen Brennstoffzelleinlass ein von Temperiermedium zum Temperieren der Brennstoffzelle durchströmter Wärmeübertrager angeordnet sein, mit welchem der zugeführte gasförmige Brennstoff temperierbar ist. In dem der Strömungspfad des zugeführten gasförmigen Brennstoffs durch einen von Temperiermedium zum Temperieren der Brennstoffzelle durchströmten Wärmeübertrager geführt ist, wird die Abwärme der Brennstoffzelle vorteilhaft zum temperieren des zugeführten gasförmigen Brennstoffs genutzt. Weiterhin kann vorgesehen sein, dass in Strömungsrichtung der zugeführten sauerstoffhaltigen Umgebungsluft vor einem kathodischen Brennstoffzelleinlass ein von dem kathodischen Abgas durchströmter Wärmeübertrager angeordnet ist, mit welchem die zugeführte sauerstoffhaltige Umgebungsluft temperierbar ist. In dem der Strömungspfad der zugeführten sauerstoffhaltigen Umgebungsluft durch einen von kathodischem Abgas der Brennstoffzelle durchströmten Wärmeübertrager geführt ist, wird die Abwärme der Brennstoffzelle vorteilhaft zum temperieren der zugeführten sauerstoffhaltigen Umgebungsluft genutzt. Vorzugsweise sind der im Strömungspfad des zugeführten gasförmigen Brennstoffs angeordnete Wärmeübertrager und der im Strömungspfad der zugeführten sauerstoffhaltigen Umgebungsluft ausgebildete Wärmeübertrager als Enthlpieübertrager ausgebildet, welcher einen Austausch von Wärme und Feuchtigkeit in Form Wasserdampf ermöglicht. Durch die Verwendung von Enthalpieübertragern können die Temperatur und der Wasserdampfgehalt des zugeführten gasförmigen Brennstoffs und der zugeführten sauerstoffhaltigen Umgebungsluft beeinflusst werden. Als Enthalpieübertager sind Wärmeübertrager zu verstehen, welche zusätzlich zur Wärmeübertagung eine Wasserdampfübertragung ermöglichen.

Das erfindungsgemäße Brennstoffzellsystem ist insbesondere zur Einbindung in Niederdruckgasnetze vorgesehen.

Die Erfindung betrifft weiterhin ein Verfahren zum Betreiben des Brennstoffzellsystems. Gemäß dem Verfahren wird einem anodischen Reaktionsbereich einer Brennstoffzelle ein gasförmiger Brennstoff zugeführt und ein anodisches Abgas abgeführt, wobei einem kathodischen Reaktionsbereich einer Brennstoffzelle sauerstoffhaltige Umgebungsluft zugeführt und kathodisches Abgas abgeführt wird. Ein vorgegebener Volumenstrom des anodischen Abgases und ein vorgegebener Volumenstrom zumindest eines Teilstroms des kathodischen Abgases werden in einem Sauerstoffabreicherungsreaktor zusammengeführt, wobei eine Reaktion von im kathodischen Abgas enthaltenem Sauerstoff und im anodischen Abgas enthaltenem Wasserstoff mittels eines Katalysators unter Ausbildung eines wasserdampfhaltigen, sauerstoffreduzierten Abgasgemischs katalysiert wird. Das wasserdampfhaltige, sauerstoffreduzierte Abgasgemisch und optional zuführbarer gasförmiger Brennstoff werden einer Verbrennung in einen Brenner zugeführt. Der Brenner wird vorzugsweise bei Umgebungsdruck betrieben, wobei die Verbrennungstemperaturen unterhalb von 1200 °C gehalten werden.

Dadurch, dass im Sauerstoffabreicherungsreaktor ein Katalysator eingesetzt wird, kann die Reaktionstemperatur zur Bildung von Wasserdampf aus Wasserstoff und Sauerstoff herabgesetzt werden. Dabei wirkt sich die durch die heißen Brennstoffzellabgase zugeführte Wärme positiv auf die Reaktion aus, so dass eine Temperierung in der Regel entfallen kann. Die Reaktion zur Wasserdampfbildung läuft somit bei vergleichsweise milden Temperaturen im Bereich von 60 °C bis 350 °C ab. Für den Fall, dass eine reaktionsungünstige Temperatur erfasst wird, welche außerhalb des reaktionsgünstigen Temperaturbereichs liegt, kann vorgesehen werden, dass die Reaktion auf eine reaktionsgünstige Temperatur temperiert wird. Das Temperieren umfasst ein Heizen oder ein Kühlen. Zur Vermeidung von Gefahren kann der Sauerstoffabreicherungsreaktor unterhalb der Zündtemperatur von Wasserstoff temperiert werden.

Es kann vorgesehen werden, dass ein Volumenstrom des dem Sauerstoffabreicherungsreaktor zugeführten kathodischen Abgasteilstroms erfasst wird und ein Volumenstrom des dem Sauerstoffabreicherungsreaktor zugeführten anodischen Abgases in Abhängigkeit des erfassten Volumenstroms des kathodischen Abgasteilstroms geregelt wird. Ferner kann zur Regelung des Volumenstroms des dem Sauerstoffabreicherungsreaktor zugeführten anodischen Abgases eine Temperatur des Sauerstoffabreicherungsreaktors berücksichtigt werden.

Zur Unterstützung der katalytischen Reaktion im Sauerstoffabreicherungsreaktor kann dem kathodischen Abgasteilstrom in der Startphase für einen kurzen Zeitraum sauerstoffhaltige Umgebungsluft zugemischt werden. Dies kann erforderlich sein, wenn für die katalytische Reaktion zur Bereitstellung eines vorgegebenen Abgasgemischs mit vorgegebenen Wasserdampfgehalt und vorgegebenen Sauerstoffgehalt mehr Sauerstoff benötigt wird, als durch den kathodischen Abgasteilstrom bereitgestellt werden kann. Dabei wird jedoch nur so viel sauerstoffhaltige Umgebungsluft bereitgestellt, dass der Sauerstoffgehalt im Abgasgemisch, welches zur Verbrennung im Brenner vorgesehen ist, kleiner ist als der Sauerstoffgehalt in der Umgebungsluft. Während des Normalbetriebes ist eine Beimischung von sauerstoffhaltiger Umgebungsluft nicht vorgesehen.

Gemäß einer Ausführungsvariante kann vorgesehen werden, dass der dem Sauerstoffabreicherungsreaktor zugeführte kathodische Abgasteilstrom temperiert wird. Vorzugsweise kann der dem Sauerstoffabreicherungsreaktor zugeführte kathodische Abgasteilstrom auf eine reaktionsgünstige Temperatur zum Durchführen der katalytischen Reaktion temperiert werden.

Vorzugsweise werden die Volumenströme der in den Sauerstoffabreicherungsreaktor zusammengeführten anodischen Abgase und kathodischen Abgase derart geregelt, dass bei der katalytischen Reaktion des im anodischen Abgas enthaltenen Wasserstoffs und des in dem kathodischen Abgas enthaltenen Sauerstoffs ein Abgasgemisch mit einem Sauerstoffgehalt kleiner als 16 %, vorzugsweise kleiner als 14 Vol. % und mit einem Taupunkt bei 57 °C bis 47 °C bereitgestellt wird. Vorzugsweise wird der Verbrennung im Brenner ein Abgasgem isch mit einem Sauerstoffgehalt kleiner als 16 %, vorzugsweise kleiner als 14 Vol.% und mit einem Taupunkt bei 57 °C bis 47 °C zugeführt.

Bei der Verbrennung im Brenner kann zusätzlich kathodisches Abgas und/oder sauerstoffhaltige Umgebungsluft zugeführt werden, um eine effiziente und stickoxidarme Verbrennung zu gewährleisten.

Gemäß eines Ausführungsbeispiels des erfindungsgemäßen Verfahrens kann der Verbrennung im Brenner Wasserstoff mit einem Volumenstrom von 3,4 Nm³/h und wasserdampfhaltiges, sauerstoffreduziertes Abgasgemisch mit einem Volumenstrom von 8,8 bis 9 Nm³/h zugeführt werden, wobei der Verbrennung im Brenner optional kathodisches Abgas mit einem Volumenstrom von 0 bis 5,5 Nm³/h und/oder Umgebungsluft mit einem Volumenstrom von 10,3 bis 11,9 Nm³/h zuführbar ist/sind. Die angegebenen Volumenströme und Volumenstromverhältnisse sind entsprechend den anlagentechnischen Gegebenheiten des Brennstoffzellsystems skalierbar. Denkbar sind verschiedene Ausführungen des erfindungsgemäßen Verfahrens, bei welchen stöchometrische Vielfache der angegebenen Volumenströme eingestellt werden.

Gemäß einer Ausgestaltung des Brennstoffzellsystems mit Anoden-Loop kann vorgesehen werden, dass dem anodischen Reaktionsbereich zumindest ein Teilstrom des anodischen Abgases zugeführt wird.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigt:

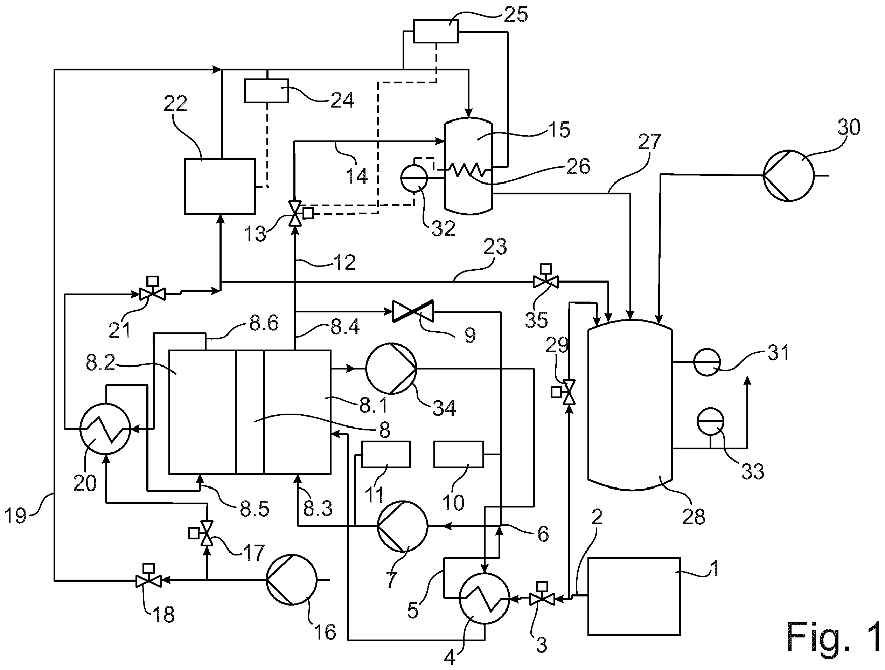

- Fig. 1:: eine schematische Darstellung eines Ausführungsbeispiels eines Brennstoffzellsystems

Die Figur 1 zeigt schematische Darstellung eines Ausführungsbeispiels eines Brennstoffzellsystems. Strömungsrichtungen sind in der Figur 1 jeweils mit Richtungspfeilen in den die Komponenten der Brennstoffzelleinrichtungen verbindenden Leitungen angegeben.

Das Brennstoffzellsystem weist eine Brennstoffzelle 8 mit einem anodischen Reaktionsbereich 8.1 und einem kathodischen Reaktionsbereich 8.2 auf. Dem anodischen Reaktionsbereich 8.1 wird ein gasförmiger Brennstoff in Form von Wasserstoff aus einer Brennstoffbereitstellung 1 über eine Anschlussleitung 2 zugeführt, wobei in der Anschlussleitung 2 in Strömungsrichtung des Brennstoffs zwischen einem anodischen Brennstoffzelleinlass 8.3 und der Brennstoffbereitstellung 1 zumindest ein Absperrventil 3 und ein Wärmeübertrager 4 angeordnet sind. Der Wärmeübertrager 4 ist Bestandteil eines Brennstoffzelltemperierkreislaufs, welcher eine Fördereinrichtung 34 zur Förderung von Temperiermedium umfasst. Der Wärmeübertager 4 wird mit erwärmtem Temperiermedium aus der Brennstoffzelle 8 durchströmt, so dass der gasförmige Brennstoff im Wärmeübertager 4 vor Eintritt in den anodischen Reaktionsbereich 8.1 vorgewärmt wird. In Strömungsrichtung des gasförmigen Brennstoffs hinter dem Wärmeübertrager 4 gelangt der gasförmige Brennstoff über eine Leitung 5 für gasförmigen Brennstoff an einem Knotenpunkt 6 in einen Anoden-Loop des anodischen Reaktionsbereichs 8.1, wobei der gasförmige Brennstoff mit anodischem Abgas gemischt wird. Das den anodischen Reaktionsbereich 8.1 durchströmte Gemisch aus gasförmigem Brennstoff und anodischem Abgas wird als anodisches Abgas am anodischen Brennstoffzellauslass 8.4 des anodischen Reaktionsbereichs 8.1 abgeführt. Der Anoden-Loop bildet eine Verbindung zwischen einer Abzweigung an dem anodischen Brennstoffzellenauslass 8.4 und dem anodischen Brennstoffzelleinlass 8.3, so dass anodisches Abgas vom anodischen Brennstoffzellenauslass 8.4 an den anodischen Brennstoffzelleinlass 8.3 zurückgeführt werden kann. Der Anoden-Loop umfasst eine regelbare Fördereinrichtung 7, beispielsweise einen Linear-Kolben-Membrankompressor, zur Förderung des Brennstoffs und eine in Strömungsrichtung hinter dem anodischen Brennstoffzellauslass 8.4 angeordnete Drosseleinrichtung 9, durch welche ein vorgegebener Überdruck in der Brennstoffzelle 8 eingestellt wird, wobei die Höhe des Überdrucks durch die Leistung der Fördereinrichtung 7 beeinflusst wird. Der Anoden-Loop weist weiterhin zwei Druckerfassungssensoren 10 und 11 auf, wobei ein erster Druckerfassungssensor 10 vor der Fördereinrichtung 7 und ein zweiter Druckerfassungssensor 11 nach der Fördereinrichtung 7 angeordnet sind. Anhand der mit den Druckerfassungssensoren 10 und 11 erfassten Drücke ist die Leistung der Fördereinrichtung 7 regelbar. Vorzugsweise wird die Leistung der Fördereinrichtung 7 derart geregelt, dass in der Brennstoffzelle 8 ein Überdruck von > 100 mbar erreicht wird.

Dem kathodischen Reaktionsbereich 8.2 wird sauerstoffhaltige Umgebungsluft am kathodischen Brennstoffzelleinlass 8.5 zugeführt, wobei am kathodischen Brennstoffzellauslass 8.6 des kathodischen Reaktionsbereichs 8.2 kathodisches Abgas abgeführt wird. Die sauerstoffhaltige Umgebungsluft wird mit einer Umgebungsluftfördereinrichtung 16 gefördert. In Strömungsrichtung der sauerstoffhaltigen Umgebungsluft hinter der Umgebungsluftfördereinrichtung 16 verzweigt die Umgebungsluftzuführung in zwei Leitungen, wobei die in Richtung des Brennstoffzelleinlasses 8.5 führende Leitung ein Absperrventil 17 aufweist und wobei eine weitere Leitung 19 ein Absperrventil 18 aufweist. Durch Sperren des Absperrventils 17 wird die von der Umgebungsluftfördereinrichtung 16 geförderte sauerstoffhaltige Umgebungsluft über die Leitung 19 abgeführt, so dass dem kathodischen Reaktionsbereich 8.2 keine sauerstoffhaltige Umgebungsluft bereitgestellt wird und der elektrochemische Prozess in der Brennstoffzelle 8 zum Erliegen kommt. Zwischen dem Brennstoffzelleinlass 8.5 und dem Absperrventil 17 durchströmt die Umgebungsluft einen Enthalpieübertrager 20, welcher zum Erwärmen der zugeführten sauerstoffhaltigen Umgebungsluft mit heißem kathodischen Abgas aus dem kathodischen Reaktionsbereich 8.2 durchströmt wird. Dabei wird weiterhin der Wasserdampfgehalt der zugeführten sauerstoffhaltigen Umgebungsluft beeinflusst.

Das Brennstoffzellsystem weist weiterhin einen Sauerstoffabreicherungsreaktor 15 auf, in welchen anodisches Abgas und zumindest ein Teilstrom des kathodischen Abgases zusammengeführt werden, wobei der Sauerstoffabreicherungsreaktor 15 einen Katalysator aufweist, welcher eine Reaktion von im kathodischen Abgas enthaltenem Sauerstoff und im anodischen Abgas enthaltenem Wasserstoff unter Ausbildung eines wasserdampfhaltigen, sauerstoffreduzierten Abgasgemischs katalysiert.

Der Strömungspfad des kathodischen Abgases in den Sauerstoffabreicherungsreaktor 15 führt zunächst über ein Absperrventil 21, hinter welchem der Strömungspfad verzweigt, wobei die Zufuhr in den Sauerstoffabreicherungsreaktor 15 über eine erste Regeleinrichtung 22 führt, welche in Strömungsrichtung des kathodischen Abgases zwischen dem Enthalpieübertrager 20 und dem Sauerstoffabreicherungsreaktor 15 angeordnet ist, und wobei eine Abzweigung 23, welche ein Absperrregelventil 35 aufweist, in einen Brenner 28 mündet. Die erste Regeleinrichtung 22 ist eingerichtet, einen Volumenstrom und eine Temperatur des dem Sauerstoffabreicherungsreaktor 15 zugeführten kathodischen Abgasteilstroms zu regeln. Zum Temperieren des kathodischen Abgases kann die erste Regeleinrichtung 22 eine elektrische oder fluidische Temperiereinrichtung aufweisen. Vorzugsweise wird das kathodische Abgas, welches dem Sauerstoffabreicherungsreaktor 15 zugeführt wird, mit der ersten Regeleinrichtung 22 auf eine für den katalytischen Prozess im Sauerstoffabreicherungsreaktor 15 günstige Reaktionstemperatur im Bereich von 60 °C bis 80 °C temperiert. Das kathodische Abgas verlässt die erste Regeleinrichtung 22 als vorkonditioniertes kathodisches Abgas.

In Strömungsrichtung des in der ersten Regeleinrichtung 22 vorkonditionierten kathodischen Abgases ist ein Druckerfassungssensor 24 angeordnet, welcher einen erfassten Druck an die erste Regeleinrichtung 22 bereitstellt.
Die erste Regeleinrichtung 22 regelt die Strömung des kathodischen Abgasteilstroms anhand von Druckwerten, welche mit dem Druckerfassungssensor 24 und einem in Strömungsrichtung des kathodischen Abgasteilstroms vor dem Sauerstoffabreicherungsreaktor 15 angeordneten Druckerfassungssensor 25 erfasst werden. Anhand der erfassten Druckwerte werden Volumenströme berechnet. Wird an dem Druckerfassungssensor 25 ein vorgegebener Schwellenwert eines Druckminimums unterschritten, wird der Durchfluss des kathodischen Abgases erhöht, in dem das Absperregelventil 21 weiter geöffnet wird. Für den Fall, dass an dem Druckerfassungssensor 25 ein vorgegebener Schwellenwert eines Druckmaximums überschritten wird, öffnet das Absperrregelventil 35 zu Stabilisierung des vorgegebenen Drucks. Die Absperrregelventile 21 und 35 können mit der ersten Regeleinrichtung 22 geregelt werden. Die Erfassung der Druckwerte ermöglicht ferner eine Bestimmung der Strömungsrichtung, so dass eine unerwünschte Strömungsrichtungsumkehr detektiert werden kann.

In Strömungsrichtung hinter der ersten Regeleinrichtung 22 mündet die Umgebungsluftleitung 19 in die Zuführung zum Sauerstoffabreicherungsreaktor 15, so dass dem vorkonditionierten kathodischen Abgas bei geöffnetem Absperrventil 18 während einer Startphase für eine vorgegebene Zeitdauer Umgebungsluft zumischbar ist.

Der Strömungspfad des anodischen Abgases in den Sauerstoffabreicherungsreaktor 15 führt über eine Leitung 12 für anodisches Abgas in eine zweite Regeleinrichtung 13 und von der zweiten Regeleinrichtung 13 über eine Leitung 14 für anodisches Abgas in den Sauerstoffabreicherungsreaktor 15. Die zweite Regeleinrichtung 13 ist eingerichtet, einen Volumenstrom des dem Sauerstoffabreicherungsreaktor 15 zugeführten kathodischen Abgasteilstroms zu erfassen und einen Volumenstrom des dem Sauerstoffabreicherungsreaktor 15 zugeführten anodischen Abgases in Abhängigkeit des erfassten Volumenstroms des kathodischen Abgases zu regeln. Zur Regelung der Volumenströme des vorkonditionierten kathodischen Abgases und des anodischen Abgases in den Sauerstoffabreicherungsreaktor 15 ist eine sensorische Erfassungseinrichtung 25 vorgesehen, welche einen Volumenstrom am Einlass für vorkonditioniertes kathodisches Abgas am Sauerstoffabreicherungsreaktor 15 erfasst. Ferner ist die sensorische Erfassungseinrichtung 25 eingerichtet, eine Druckdifferenz zwischen dem Einlass für vorkonditioniertes kathodisches Abgas am Sauerstoffabreicherungsreaktor 15 und dem Inneren des Sauerstoffabreicherungsreaktors 15 zu erfassen. Von der sensorischen Erfassungseinrichtung 25 erfasste Daten werden an die zweite Regeleinrichtung 13 bereitgestellt. Die zweite Regeleinrichtung 13 regelt den Volumenstrom des anodischen Abgases so, dass die Wasserstoffkonzentration am Einlass zum Sauerstoffabreicherungsreaktor 15 unterhalb der Zündgrenze bleibt. Die Volumenstromreglung des anodischen Abgases basiert auf einem mit dem Druckerfassungssensor 25 erfassten Druckwert sowie auf einer Sauerstoffabreicherungsreaktortemperatur, welche mit einem Temperatursensor 32 im Inneren des Sauerstoffabreicherungsreaktor erfasst wird.

Der Temperatursensor 32 stellt Temperaturwerte des Sauerstoffabreicherungsreaktors 15 an die zweite Regeleinrichtung 13 bereit, wobei die zweite Regeleinrichtung 13 einen Volumenstrom des anodischen Abgases in den Sauerstoffabreicherungsreaktor 15 bei Einhaltung der Betriebstemperaturgrenzen freigibt. Die untere Betriebstemperaturgrenze des Sauerstoffabreicherungsreaktors 15 beträgt 60 °C, wobei die obere Betriebstemperaturgrenze unterhalb der Selbstentzündungstemperatur von Wasserstoff liegt. Vorzugsweise beträgt die obere Betriebstemperaturgrenze maximal 350 °C.

Der Sauerstoffabreicherungsreaktor 15 weist eine Temperiereinrichtung 26 auf, mit welcher der Sauerstoffabreicherungsreaktor 15 temperierbar ist.

Das Brennstoffzellsystem umfasst weiterhin einen Brenner 28 zum Verbrennen von optional zuführbarem gasförmigen Brennstoff, welcher aus einer Abzweigung der Anschlussleitung 2 bereitgestellt wird, in dem ein in der Abzweigung angeordnetes Absperrventil 29 geöffnet wird. Über eine Abgasleitung 27 gelangt zusätzlich wasserdampfhaltiges, sauerstoffreduziertes Abgasgemisch aus dem Sauerstoffabreicherungsreaktor 15 zur Verbrennung in den Brenner 28. Dem Brenner 28 ist kathodisches Abgas aus der Abzweigung 23 zuführbar. Weiterhin kann dem Brenner 28 Umgebungsluft zugeführt werden, wobei die Umgebungsluft mit einer Umgebungsluftfördereinrichtung 30 gefördert wird. Der Brenner 28 umfasst weiterhin eine Brennkammer, eine Zündvorrichtung, eine Verbrennungsüberwachung 31, eine Abgasüberwachung 33, eine Kondensatabführung, eine Abgasabführung und mindestens einen Wärmeübertrager (nicht gezeigt).

Gemäß einer Ausführungsvariante zum Betreiben des Brennstoffzellsystems werden die Volumenströme der in den Sauerstoffabreicherungsreaktor 15 zusammengeführten anodischen Abgase und kathodischen Abgase derart geregelt, dass bei der katalytischen Reaktion des im anodischen Abgas enthaltenen Wasserstoffs und des in dem kathodischen Abgas enthaltenen Sauerstoffs ein wasserdampfhaltiges, sauerstoffreduziertes Abgasgemisch mit einem Sauerstoffgehalt kleiner als 16 % und mit einem Taupunkt bei 57 °C bis 47 °C bereitgestellt wird. Der Verbrennung im Brenner 28 kann dann ein Abgasgemisch mit einem Sauerstoffgehalt kleiner als 16 % und mit einem Taupunkt bei 57 °C bis 47 °C zugeführt werden. Gemäß dem Ausführungsbeispiel wird der Verbrennung im Brenner 28 wasserdampfhaltiges, sauerstoffreduziertes Abgasgemisch mit einem Volumenstrom von 8,8 bis 9 Nm³/h und Wasserstoff mit einem Volumenstrom von 3,4 Nm³/h zugeführt, wobei der Verbrennung im Brenner 28 optional kathodisches Abgas mit einem Volumenstrom von 0 bis 5,5 Nm³/h und/oder Umgebungsluft mit einem Volumenstrom von 10,3 bis 11,9 Nm³/h zugeführt werden kann/können.

### Bezugszeichenliste

- 1: Brennstoffbereitstellung
- 2: Anschlusleitung
- 3: Absperrventil
- 4: Wärmeübertrager
- 5: Leitung für Brennstoff
- 6: Knotenpunkt
- 7: Fördereinrichtung
- 8: Brennstoffzelle
- 8.1: anodischer Reaktionsbereich
- 8.2: kathodischer Reaktionsbereich
- 8.3: anodischer Brennstoffzelleinlass
- 8.4: anodischer Brennstoffzellauslass
- 8.5: kathodischer Brennstoffzelleinlass
- 8.6: kathodischer Brennstoffzellauslass
- 9: Drosseleinrichtung
- 10: erster Druckerfassungssensor
- 11: zweiter Druckerfassungssensor
- 12: Leitung für anodisches Abgas
- 13: zweite Regeleinrichtung
- 14: Leitung für anodisches Abgas
- 15: Sauerstoffabreicherungsreaktor
- 16: Umgebungsluftfördereinrichtung
- 17: Absperrventil
- 18: Absperrventil
- 19: Umgebungsluftleitung
- 20: Wärmeübertager / Enthalpieübertrager
- 21: Absperrregelventil
- 22: erste Regeleinrichtung
- 23: Abzweigung
- 24: Druckerfassungssensor
- 25: sensorische Erfassungseinrichtung
- 26: Temperiereinrichtung
- 27: Abgasleitung
- 28: Brenner
- 29: Absperrventil
- 30: Umgebungsluftfördereinrichtung
- 31: Verbrennungsüberwachung
- 32: Temperatursensor
- 33: Abgasüberwachung
- 34: Fördereinrichtung
- 35: Absperrregelventil

## Patentansprüche

1. Brennstoffzellsystem zur Strom- und Wärmeerzeugung, das Brennstoffzellsystem aufweisend
- mindestens eine Brennstoffzelle (8) mit einem anodischen Reaktionsbereich (8.1) und einem kathodischen Reaktionsbereich (8.2), wobei dem anodischen Reaktionsbereich (8.1) ein gasförmiger Brennstoff zugeführt und ein anodisches Abgas abgeführt wird und wobei dem kathodischen Reaktionsbereich (8.2) sauerstoffhaltige Umgebungsluft zugeführt und kathodisches Abgas abgeführt wird,
- einen Sauerstoffabreicherungsreaktor (15), in welchen anodisches Abgas und zumindest ein Teilstrom des kathodischen Abgases zusammengeführt werden, wobei der Sauerstoffabreicherungsreaktor (15) einen Katalysator aufweist, welcher eine Reaktion von im kathodischen Abgas enthaltenem Sauerstoff und im anodischen Abgas enthaltenem Wasserstoff unter Ausbildung eines wasserdampfhaltigen, sauerstoffreduzierten Abgasgemischs katalysiert, und
- einen Brenner (28) zum Verbrennen von Abgasen der Brennstoffzelle (8) und/oder zuführbarem gasförmigen Brennstoff, wobei dem Brenner (8) kathodisches Abgas und/oder wasserdampfhaltiges, sauerstoffreduziertes Abgasgemisch aus dem Sauerstoffabreicherungsreaktor (15) zuführbar ist.

2. Brennstoffzellsystem nach Anspruch 1, **dadurch gekennzeichnet, dass** als Katalysator im Sauerstoffabreicherungsreaktor (15) ein Edelmetall, vorzugsweise Palladium, eingesetzt wird.

3. Brennstoffzellsystem nach einem der Ansprüche 1 oder 2, **dadurch gekennzeichnet, dass** in Strömungsrichtung des kathodischen Abgases zwischen der Brennstoffzelle (8) und dem Sauerstoffabreicherungsreaktor (15) eine erste Regeleinrichtung (22) angeordnet ist, welche einen Volumenstrom und eine Temperatur des dem Sauerstoffabreicherungsreaktor (15) zugeführten kathodischen Abgasteilstroms regelt.

4. Brennstoffzellsystem nach Anspruch 3, **dadurch gekennzeichnet, dass** die erste Regeleinrichtung (22) eine fluidische Temperiereinrichtung oder eine elektrische Temperiereinrichtung aufweist.

5. Brennstoffzellsystem nach einem der Ansprüche 1 bis 4, **dadurch gekennzeichnet, dass** in Strömungsrichtung des anondischen Abgases zwischen der Brennstoffzelle (8) und dem Sauerstoffabreicherungsreaktor (15) eine zweite Regeleinrichtung (13) angeordnet ist, welche einen Volumenstrom des dem Sauerstoffabreicherungsreaktor (15) zugeleiteten kathodischen Abgasteilstroms erfasst und einen Volumenstrom des dem Sauerstoffabreicherungsreaktor (15) zugeleiteten anodischen Abgases in Abhängigkeit des erfassten Volumenstroms des kathodischen Abgasteilstroms regelt.

6. Brennstoffzellsystem nach einem der Ansprüche 1 bis 5, **dadurch gekennzeichnet, dass** am Sauerstoffabreicherungsreaktor (15) eine Temperiereinrichtung zum Temperieren des Sauerstoffabreicherungsreaktor (15) ausgebildet ist.

7. Brennstoffzellsystem nach einem der Ansprüche 1 bis 6, **dadurch gekennzeichnet, dass** der anodische Reaktionsbereich (8.2) eine ventilgesteuerte Rezirkulation für anodisches Abgas aufweist, welche einen Teilstrom des anodischen Abgases dem anodischen Reaktionsbereich (8.2) zuführt.

8. Brennstoffzellsystem nach Anspruch 7, **dadurch gekennzeichnet, dass** die ventilgesteuerte Rezirkulation für anodisches Abgas eine Drosseleinrichtung (9) aufweist, welche eine Strömung durch den anodischen Reaktionsbereich (8.2) zur Bereitstellung eines vorgegebenen Drucks drosselt.

9. Brennstoffzellsystem nach einem der Ansprüche 1 bis 8, **dadurch gekennzeichnet, dass** in Strömungsrichtung des zugeführten gasförmigen Brennstoffs vor einem anodischen Brennstoffzelleinlass (8.3) ein von Temperiermedium zum Temperieren der Brennstoffzelle (8) durchströmter Wärmeübertrager (4) angeordnet ist, mit welchem der zugeführte gasförmige Brennstoff temperierbar ist.

10. Brennstoffzellsystem nach einem der Ansprüche 1 bis 9, **dadurch gekennzeichnet, dass** in Strömungsrichtung der zugeführten sauerstoffhaltigen Umgebungsluft vor einem kathodischen Brennstoffzelleinlass (8.5) ein von dem kathodischen Abgas durchströmter Enthalpieübertrager (20) angeordnet ist, mit welchem die zugeführte sauerstoffhaltige Umgebungsluft temperierbar ist.

11. Verfahren zum Betreiben eines Brennstoffzellsystems mit den Merkmalen der Ansprüche 1 bis 10, bei welchem einem anodischen Reaktionsbereich (8.1) einer Brennstoffzelle (8) ein gasförmiger Brennstoff zugeführt und ein anodisches Abgas abgeführt wird und wobei einem kathodischen Reaktionsbereich (8.2) einer Brennstoffzelle (8) sauerstoffhaltige Umgebungsluft zugeführt und kathodisches Abgas abgeführt wird, ein vorgegebener Volumenstrom des anodischen Abgases und ein vorgegebener Volumenstrom zumindest eines Teilstroms des kathodischen Abgases in einem Sauerstoffabreicherungsreaktor (15) zusammengeführt werden, wobei eine Reaktion von im kathodischen Abgas enthaltenem Sauerstoff und im anodischen Abgas enthaltenem Wasserstoff mittels eines Katalysators unter Ausbildung eines wasserdampfhaltigen, sauerstoffreduzierten Abgasgemischs mit katalysiert wird, und das wasserdampfhaltige, sauerstoffreduzierte Abgasgemisch und optional zuführbarer gasförmiger Brennstoff einer Verbrennung in einen Brenner zugeführt werden.

12. Verfahren nach Anspruch 11, **dadurch gekennzeichnet, dass** ein Volumenstrom des dem Sauerstoffabreicherungsreaktor (15) zugeführten kathodischen Abgasteilstroms erfasst wird und ein Volumenstrom des dem Sauerstoffabreicherungsreaktor (15) zugeführten anodischen Abgases in Abhängigkeit des erfassten Volumenstroms des kathodischen Abgasteilstroms geregelt wird.

13. Verfahren nach einem der Ansprüche 11 oder 12, **dadurch gekennzeichnet, dass** eine Temperatur im Sauerstoffabreicherungsreaktor erfasst wird, wobei der dem Sauerstoffabreicherungsreaktor (15) zugeführte Volumenstrom des kathodischen Abgasteilstroms in Abhängigkeit von der Temperatur im Sauerstoffabreicherungsreaktor (15) geregelt wird.

14. Verfahren nach einem der Ansprüche 11 bis 13, **dadurch gekennzeichnet, dass** der dem Sauerstoffabreicherungsreaktor (15) zugeführte kathodische Abgasteilstrom temperiert wird.

15. Verfahren nach einem der Ansprüche 11 bis 14, **dadurch gekennzeichnet, dass** der Sauerstoffabreicherungsreaktor (15) unterhalb der Zündtemperatur von Wasserstoff temperiert wird.

16. Verfahren nach einem der Ansprüche 11 bis 15, **dadurch gekennzeichnet, dass** der Verbrennung im Brenner zusätzlich kathodisches Abgas und/oder sauerstoffhaltige Umgebungsluft zugeführt wird.

17. Verfahren nach einem der Ansprüche 11 bis 16, **dadurch gekennzeichnet, dass** der Verbrennung im Brenner Wasserstoff mit einem Volumenstrom von 3,4 Nm³/h und wasserdampfhaltiges, sauerstoffreduziertes Abgasgemisch mit einem Volumenstrom von 8,8 bis 9 Nm³/h zugeführt werden, wobei der Verbrennung im Brenner optional kathodisches Abgas mit einem Volumenstrom von 0 bis 5,5 Nm3/h und/oder Umgebungsluft mit einem Volumenstrom von 10,3 bis 11,9 Nm³/h zuführbar ist/sind.

18. Verfahren nach einem der Ansprüche 11 bis 17, **dadurch gekennzeichnet, dass** die Volumenströme der in den Sauerstoffabreicherungsreaktor (15) zusammengeführten anodischen Abgase und kathodischen Abgase derart geregelt werden, dass bei der katalytischen Reaktion des im anodischen Abgas enthaltenen Wasserstoffs und des in dem kathodischen Abgas enthaltenen Sauerstoffs ein Abgasgemisch mit einem Sauerstoffgehalt kleiner als 16 %, vorzugsweise kleiner als 14 % Vol.% und mit einem Taupunkt bei 57 °C bis 47 °C bereitgestellt wird.

19. Verfahren nach einem der Ansprüche 11 bis 18, **dadurch gekennzeichnet, dass** dem anodischen Reaktionsbereich (8.2) zumindest ein Teilstrom des anodischen Abgases zugeführt wird.
